# FASCICULE DE BREVET EUROPEEN

(11) **EP 3 075 655 B1**
(45) Date de publication et mention de la délivrance du brevet: **07.03.2018**
(21) Numéro de dépôt: 16162946.4
(22) Date de dépôt: 30.03.2016
(51) Int. Cl.: B64C 27/35, B64C 27/51

(54) **DISPOSITIF POUR AERONEF A VOILURE TOURNANTE APTE A FOURNIR UNE INFORMATION RELATIVE AU NIVEAU D'ENDOMMAGEMENT PAR FATIGUE DE CE DISPOSITIF**
VORRICHTUNG FÜR DREHFLÜGELFLUGZEUG, DIE IN DER LAGE IST, EINE INFORMATION BEZÜGLICH DES MATERIALERMÜDUNGSSCHADENS DIESER VORRICHTUNG ZU LIEFERN
DEVICE FOR ROTARY-WING AIRCRAFT CAPABLE OF PROVIDING INFORMATION ON THE LEVEL OF DAMAGE DUE TO FATIGUE OF SAID DEVICE

(30) Priorité: 31.03.2015 FR 1552722
(43) Date de publication de la demande: 05.10.2016
(73) Titulaire: HUTCHINSON, 75008 Paris (FR)
(72) Inventeur: FROMONT, Yann, 95300 PONTOISE (FR); BRICHE, Florian, 92300 LEVALLOIS PERRET (FR)
(74) Mandataire: Gevers & Orès

(56) Documents cités:
- EP-A1- 2 184 229
- EP-A1- 2 774 846
- US-A1- 2009 162 201

## Description

La présente invention concerne un dispositif, destiné à être interposé entre deux pièces d'un aéronef à voilure tournante qui sont susceptibles de subir un mouvement relatif répété l'une par rapport à l'autre et, apte à fournir une information relative au niveau d'endommagement par fatigue du dispositif.

La présente invention concerne également une utilisation d'un tel dispositif pour détecter la présence d'une fissure.

Un exemple d'aéronef à voilure tournante est un hélicoptère.

On connaît de nombreux dispositifs (butées lamifiées, amortisseurs, ...) qui sont utilisés dans un aéronef à voilure tournante.

Ces dernières années, et dans le but d'améliorer la détection d'une fissure par un technicien de maintenance, différentes solutions ont été proposées.

EP2184229 propose un dispositif selon le préambule de la revendication 1.

Par ailleurs, WO 2011/062639 (D1) propose un dispositif qui, pendant son utilisation, permet de déterminer le niveau d'endommagement par fatigue du dispositif.

La solution envisagée dans ce document met à profit le mode de dégradation en fatigue, connu en soi, d'un tel dispositif, notamment une butée lamifiée, qui est utilisée pour ce type d'application.

Une butée lamifiée présente généralement un empilement comportant plusieurs couches en élastomère séparées entre elles par des coupelles réalisées en un matériau non élastomère plus rigide que l'élastomère, par exemple un matériau métallique. L'empilement est donc typiquement formé par un motif de base constitué d'une couche d'élastomère prise en sandwich entre deux coupelles métalliques.

Sous l'effet de la rotation des pales de l'hélicoptère, une butée lamifiée, séparant deux pièces mécaniques transmettant ce mouvement des pales, fatigue. Cette fatigue se traduit par une amorce de fissures puis par une propagation de ces fissures depuis l'extérieur vers l'intérieur de la butée lamifiée. La conséquence est un émiettement de l'élastomère dans le volume intérieur de la butée lamifiée. L'élastomère émietté peut ainsi se déplacer dans la fissure formée et sortir de la butée lamifiée.

Cela n'indique pas pour autant à ce technicien que la butée lamifiée doit impérativement être changée.

Aussi, la solution proposée dans ce document pour déterminer si la butée lamifiée doit être changée est de prévoir, au sein du lamifié formant la butée, une région interne de la butée, laquelle comporte au moins une couche en élastomère, présentant une zone de couleur différente (jaune, par exemple) de la couleur d'une région externe de cette butée (noire, par exemple). Cette région interne est réalisée à une distance déterminée de la surface extérieure de la butée lamifiée, en l'occurrence à une distance à laquelle on estime que, lorsqu'une fissure se propageant depuis l'extérieur de la butée lamifiée vers l'intérieur de cette butée lamifiée, la butée lamifiée doit être changée.

Ainsi, lorsque la butée lamifiée fatigue, si un technicien de maintenance observe des miettes d'élastomère de ladite couleur (jaune, dans l'exemple considéré), cela signifie que la fissure a atteint la profondeur déterminée et en conséquence, que la butée lamifiée doit être changée.

Ceci est intéressant car cela permet une visualisation rapide pour le technicien de maintenance.

Un inconvénient susceptible d'être rencontré avec ce dispositif est que les miettes d'élastomère (jaunes dans l'exemple) peuvent ne pas être visibles sur la surface extérieure, leur pouvoir collant pouvant être insuffisant pour résister aux conditions de vol de l'aéronef à voilure tournante.

Il existe donc un risque qu'un technicien de maintenance ne puisse en fait pas visualiser aisément que la butée lamifiée doit effectivement être changée.

FR 2 949 432 (D2) propose un autre dispositif de ce type, en l'occurrence un amortisseur destiné à être installé sur un rotor d'aéronef à voilure tournante.

La solution envisagée dans ce document consiste à prévoir une chambre, au sein d'une couche en élastomère, qui est remplie d'un fluide.

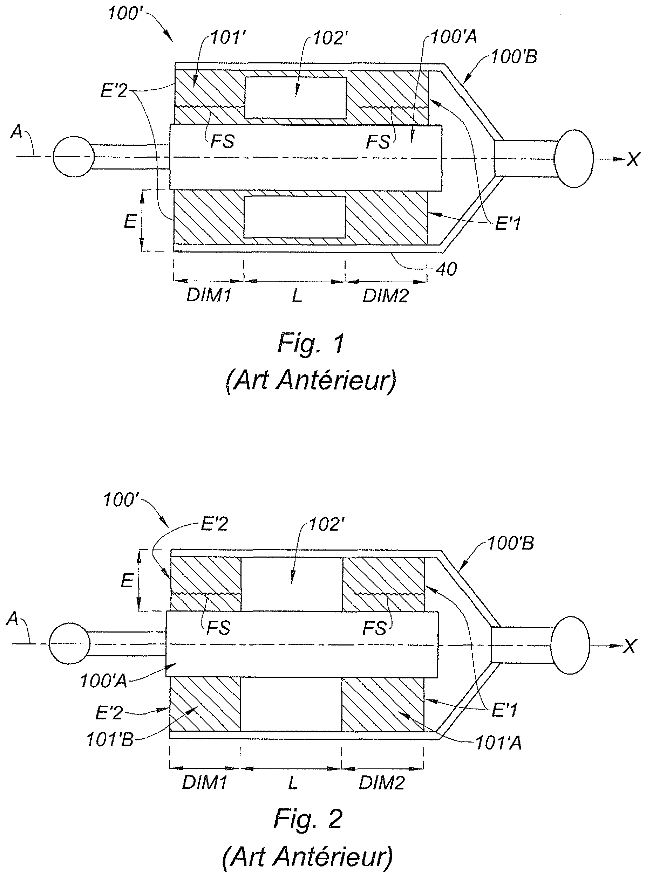

Deux modes de réalisation de cet amortisseur sont présentés à l'appui de la figure 1 et de la figure 2, respectivement.

Cet amortisseur 100' comprend deux éléments d'armature 100'A, 100'B chacun destinés à être monté sur l'une des pièces d'un rotor d'aéronef à voilure tournante.

Sur la figure 1, l'amortisseur 100' comprend une couche en élastomère 101' disposée entre les deux éléments d'armature 100'A, 100'B et une chambre unique 102' disposée au sein de la couche 101' en élastomère. La chambre unique 102' est remplie d'un liquide coloré. La chambre 102' est disposée à une distance prédéterminée DIM1, DIM 2 de l'une ou l'autre des extrémités E'1, E'2 de la couche en élastomère.

Sous l'effet d'un mouvement relatif répété des pièces du rotor d'aéronef à voilure tournante, une ou plusieurs fissure(s) se propage(nt) depuis l'une au moins des extrémités E'1, E'2 de la couche 101' en élastomère en direction de la chambre 102'. Cette fissure est caractéristique d'un endommagement par fatigue de la couche 101' en élastomère.

Lorsque cette fissure atteint la chambre 102', le liquide coloré contenu dans la chambre passe par la fissure et a tendance à sortir de l'amortisseur 100'.

Ainsi, lors d'une opération de maintenance, un technicien peut se rendre compte de la fuite de liquide hors de la chambre unique 102' et en déduire que la pièce doit être changée.

Toutefois, de manière encore plus aiguë que dans le document D1, le technicien de maintenance risque de ne pas observer que la fissure a atteint une profondeur lui indiquant que la pièce doit être changée, du fait que le liquide coloré s'échappe hors de la fissure.

C'est pourquoi, il peut être prévu un capteur de pression qui mesure la pression du liquide dans la chambre 102'. Grâce à cela, on peut éviter l'inconvénient rencontré avec la solution proposée dans le document D1, en suivant la pression fournie par le capteur de pression.

Toutefois, cette solution présente plusieurs inconvénients.

En effet, la mise en oeuvre d'un capteur de pression rend le dispositif plus complexe et plus lourd et il est toujours possible que le capteur de pression fasse défaut.

De plus, la présence de la chambre 102', qui présente une section annulaire faisant le tour complet de la couche en élastomère autour de son axe longitudinal, altère les propriétés mécaniques, en particulier les propriétés dynamiques, de l'amortisseur 100', par rapport à un amortisseur ne comportant pas une telle chambre 102'.

En outre, la présence d'une telle chambre 102' peut également avoir un impact négatif sur la durée de vie (fatigue) de l'amortisseur.

L'altération des propriétés mécaniques peut être accentuée, par rapport à un tel amortisseur classique, lorsque la chambre unique 102' scinde, en outre, la couche en élastomère 101' en deux parties distinctes 101'A, 101'B, comme cela est représenté sur la figure 2.

Ceci peut également avoir un impact négatif sur la durée de vie (fatigue) de l'amortisseur.

Un objectif de l'invention est de proposer un dispositif destiné à être interposé entre deux pièces d'un aéronef à voilure tournante qui sont susceptibles de subir un mouvement relatif répété l'une par rapport à l'autre, apte à fournir une information relative au niveau d'endommagement par fatigue du dispositif et, ne présentant pas l'un au moins des inconvénients précités.

Pour atteindre cet objectif, l'invention propose un dispositif destiné à être interposé entre deux pièces d'un aéronef à voilure tournante qui sont susceptibles de subir un mouvement relatif répété, le dispositif comprenant :
- au moins deux éléments d'armature destinés à être montés sur l'une au moins des deux pièces du rotor, et
- au moins une couche en élastomère disposée entre les deux éléments d'armature,
caractérisé en ce que l'élastomère formant ladite au moins une couche en élastomère est translucide.

Ce dispositif pourra également présenter l'une au moins des caractéristiques suivantes, prises seules ou en combinaison :
- l'élastomère translucide formant ladite au moins une couche en élastomère comprend au moins un additif pour améliorer, lorsqu'une fissure est présente dans ladite couche, le contraste entre la fissure et l'élastomère ;
- ledit au moins un additif présente des propriétés de luminescence ;
- l'élastomère translucide formant ladite au moins une couche en élastomère comprend au moins deux additifs, pour améliorer, lorsqu'une fissure est présente dans ladite couche, le contraste entre la fissure et l'élastomère, l'un de ces additifs présentant des propriétés de luminescence, l'autre non ;

- l'élastomère translucide formant ladite au moins une couche en élastomère est à base de silicone, par exemple du Silplus 70 HS ;
- il est prévu un empilement comportant ladite au moins une couche en élastomère translucide et au moins une coupelle réalisée en un matériau non élastomère plus rigide que l'élastomère translucide formant ladite au moins une couche en élastomère ;
- l'empilement comprend plusieurs couches en élastomère translucide qui sont séparées entre elles par des coupelles réalisées en un matériau non élastomère plus rigide que l'élastomère translucide formant lesdites couches en élastomère, lesdites couches et coupelles étant disposées de façon alternée ;
- ladite au moins une couche en élastomère est translucide.

L'invention propose également une utilisation de ce dispositif pour détecter une fissure dans l'élastomère translucide formant ladite au moins une couche en élastomère.

L'invention sera mieux comprise et d'autres buts, avantages et caractéristiques de celle-ci apparaîtront plus clairement à la lecture de la description qui suit et qui est faite au regard des dessins annexés, sur lesquels :
- la figure 3 représente une vue générale d'un rotor principal d'hélicoptère ;
- la figure 4 (a) est une vue éclatée d'un amortisseur conforme à l'invention, à l'état neuf, la figure 4(b) est une vue, selon une coupe longitudinale, de la couche en élastomère de la figure 4(a) et la figure 4(c) est une coupe transversale de la couche en élastomère de la figure 4(a) selon le plan de coupe A-A représenté sur la figure 4(b) ;
- la figure 5(a) est une vue similaire de celle de la figure 4(b), mais lorsque l'amortisseur doit être changé et la figure 5(b) est une vue de côté de la couche en élastomère de la figure 5(a) ;
- la figure 6, qui comprend les figures 6(a) et 6(b) représentant respectivement une vue en coupe longitudinale de la couche en élastomère et une vue de côté, fournit quelques données géométriques d'une couche en élastomère d'un amortisseur testé expérimentalement ;
- la figure 7 représente quelques données précisant les conditions de mises en oeuvre du test d'endommagement par fatigue réalisé sur l'amortisseur de la figure 6 ;
- la figure 8 représente ce que l'on peut observer à l'issue du test ;
- la figure 9, qui comporte les figures 9(a) et 9(b), représente une articulation lamifiée cylindrique conforme à l'invention selon une vue de côté et une vue en coupe respectivement ;
- la figure 10, qui comporte les figures 10(a) à 10(c), représente une butée lamifiée conforme à l'invention selon une vue en perspective, une vue de côté et une vue en coupe, respectivement ;
- la figure 11, qui comporte les figures 11(a) à 11(c), représente une rotule lamifiée conforme à l'invention selon une vue en perspective, une vue de face et une vue en coupe, respectivement ;
- la figure 12, qui comporte les figures 12(a) et 12(b), représente un palier lamifié conforme à l'invention, en l'occurrence de forme rectangulaire, et selon une vue en perspective et de côté, respectivement.

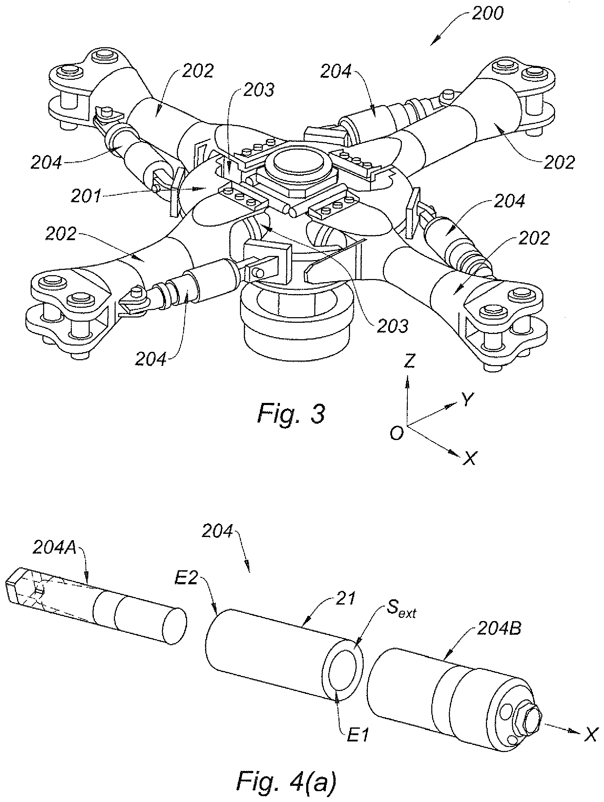

La figure 3 représente un rotor 200 principal d'un aéronef à voilure tournante sur lequel on peut distinguer un moyeu 201 et des manchons 202 s'étendant radialement à partir du moyeu 201 et destinés à porter les pales (non représentées) de cet aéronef.

On relève la présence de butées lamifiées 203, en l'occurrence sphériques, disposées entre le moyeu 201 et l'extrémité de chacun des manchons 202 situés du côté du moyeu 201.

On note également la présence d'amortisseurs 204, disposés entre le moyeu 201 et l'extrémité opposée de chacun des manchons 202. Ils sont généralement nommés amortisseurs moyeu-pale. Ces amortisseurs 204 ne sont généralement pas lamifiés.

Les butées lamifiées sphériques 203 et les amortisseurs 204 sont typiquement des dispositifs qui peuvent faire l'objet de l'invention.

il convient également de noter que, si la figure 3 représente un rotor principal, l'invention peut également s'appliquer à des butées lamifiées ou amortisseurs, par exemple non lamifiés, susceptibles d'être mis en oeuvre sur le rotor arrière (non illustré) d'un tel aéronef.

D'autres dispositifs utilisables pour un tel aéronef, par exemple des butées lamifiées planes, des articulations cylindriques ou coniques, des rotules lamifiées ou encore des amortisseurs pale-pale (non représentés sur les figures annexées), peuvent également faire l'objet de l'invention. Ces dispositifs ne sont pas nécessairement installés au niveau d'un rotor d'un aéronef à voilure tournante.

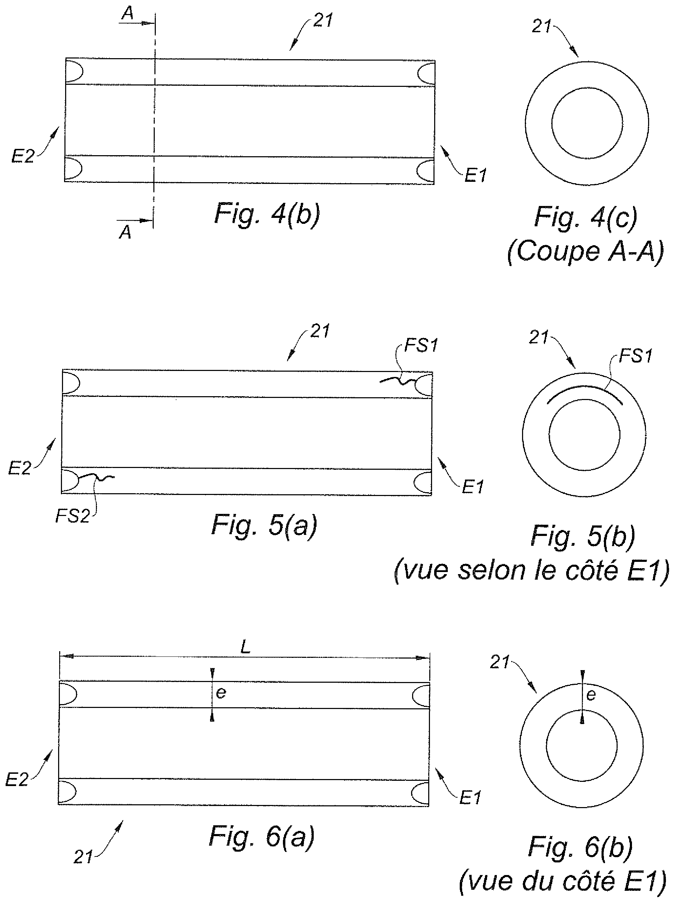

La figure 4(a) représente, selon une vue en perspective éclatée, un amortisseur 204 conforme à l'invention.

L'amortisseur 204 comprend un premier élément d'armature 204A (armature centrale), par exemple réalisé en un matériau métallique, un deuxième élément d'armature 204B (armature extérieure), qui peut également être réalisé en un matériau métallique, et une couche en élastomère 21 remplissant l'espace entre les deux éléments d'armature 204A, 204B. L'armature centrale 204A se présente généralement sous la forme d'un cylindre plein et l'armature extérieure 204B sous la forme d'un anneau cylindrique. De ce fait, la couche 21 en élastomère se présente généralement sous la forme d'un anneau cylindrique.

La couche 21 en élastomère présente une surface extérieure Sₑₓₜ qui est en l'occurrence scindée en deux parties, et définie par ses deux extrémités E1, E2 qui ne sont pas en contact avec l'un ou l'autre des éléments d'armature 204A, 204B. La couche 21 en élastomère présente également un volume interne Vᵢₙₜ, duquel ne fait pas partie la surface extérieure Sₑₓₜ.

L'élastomère formant la couche 21 en élastomère est réalisé en un matériau translucide.

Lors d'un mouvement relatif répété entre les pièces de l'aéronef à voilure tournante sur lesquelles les éléments d'armature 204A, 204B sont montés (cf. figure 3), une fissure se propage depuis la surface extérieure Sₑₓₜ de la couche 21 en élastomère (extrémité E1 et/ou extrémité E2), selon la direction longitudinale de cette couche 21, vers le volume interne Vint.

Cette situation est représentée sur les figures 5(a) et 5(b). La figure 5(b) correspond à la figure 4(b), une fois que des fissures FS1, FS2 se sont propagées. La figure 5(b) est une vue, selon le côté E1 de la couché 21 en élastomère, de la figure 5(a).

Ces fissures FS1, FS2 peuvent alors être détectées dans la couche 21 en élastomère.

En effet, la fissure (absence d'élastomère) apparaît alors plus sombre que son environnement en élastomère translucide. La détection de la fissure peut être facilitée à l'aide d'une lampe émettant dans le domaine visible pour obtenir un meilleur contraste entre la fissure et l'élastomère translucide entourant cette fissure.

A titre d'exemple, on peut prévoir, pour la couche 21 en élastomère, la composition fournie dans le tableau 1 qui propose un élastomère translucide utilisable pour les applications envisagées.

En complément, l'élastomère translucide, tel que celui qui est proposé dans le tableau 1, peut comporter un additif qui permet d'améliorer le contraste entre la fissure (absence d'élastomère) et l'élastomère translucide entourant cette fissure. L'homme du métier comprendra que l'additif ne change donc pas le caractère translucide de l'élastomère.

Un additif envisageable à l'élastomère translucide peut être un additif présentant des propriétés de luminescence. Il peut s'agir d'un azurant optique, qui selon sa nature, peut conférer à la couche en élastomère translucide des propriétés fluorescentes ou phosphorescentes. Un exemple d'azurant optique susceptible de convenir est le benzoxazole, par exemple proposé sous la dénomination COMAX® OA par la société COMA Additive GmbH. De manière générale, la détection de la fissure sera alors facilitée à l'aide d'une lampe émettant dans un domaine permettant de faire apparaître les propriétés de luminescence. On peut ainsi faire apparaître un contraste plus important entre l'élastomère et la fissure. Dans le cas particulier du COMAX®, il conviendra d'utiliser une lampe UV (ultraviolet).

Un autre additif envisageable à l'élastomère translucide peut être un additif non luminescent. Par exemple, il peut s'agir d'un additif du type silice de pyrogénation, tel que celui qui est proposé par la société Evonik Industries AG Silica sous la dénomination Aerosil® R 812. Le nom chimique de l'Aerosil® R 812 est le silanamine, 1, 1, 1-triméthyl-N-(triméthylsilyl)-. La détection de la fissure peut être améliorée à l'aide d'une lampe émettant dans le domaine visible.

Il convient de noter que les deux types d'additifs, luminescent d'une part et non luminescent d'autre part peuvent être envisagés dans le l'élastomère translucide formant la couche 21 en élastomère.

Pour fabriquer un amortisseur selon l'invention, le procédé de fabrication est classique avec cependant, un élastomère translucide qui peut comprendre un ou plusieurs additifs tels que ceux écrits précédemment pour améliorer le contraste entre la fissure et l'élastomère, lorsqu'une telle fissure est présente dans l'élastomère.

### Exemple de réalisation et test associé.

Un amortisseur conforme à l'invention a été testé.

On a précisé sur la figure 6, qui comprend les figures 6(a) et 6(b), quelques dimensions indicatives de la couche 21 en élastomère de cet amortisseur.

La longueur L (axe X, longitudinal) de la couche 21 en élastomère est de L = 60mm.

L'épaisseur e (radial) de la couche 21 en élastomère est de e = 8mm (rayon interne Rᵢ = 18mm ; rayon externe Rₑ = 26mm). Cette épaisseur e correspond à la distance séparant, radialement, un élément d'armature (armature centrale) à l'autre (armature extérieure).

La couche 21 en élastomère est réalisée en un matériau translucide conformément au tableau 1.

**Tableau 1**

| Produit | Quantité (« pce ») |
|---|---|
| Silplus© 70 HS | 100 |
| Di-cup 40 C | 1 |

Silplus© 70 HS est un produit proposé par la société *Momentive Performance Materials Inc.* Ces caractéristiques peuvent être identifiées à l'adresse suivante:
http://www.momentive.com/Products/home aspx?id=22068.
Silplus© 70 HS est un élastomère silicone translucide.

Le Di-cup 40 C est un peroxyde de dicumyle servant d'agent de réticulation. Il est par exemple proposé sur le marché par la société *Harwick Standard Distribution Corporation.* La formule brute du Di-cup 40C est la suivante : 2-(2-phenylpropan-2-ylperoxy)propan-2-ylbenzene (cet additif ne sert pas à améliorer le contraste entre la fissure et l'élastomère, mais ne modifie pas le caractère translucide du Silplus© 70 HS).

Enfin, le « pce » est une unité largement répandue chez les caoutchoutiers, signifiant « partie pour cent d'élastomère ». Un « pce » correspond à une partie d'un constituant pour cent parties d'élastomère, en masse. Ainsi, dans le tableau 1, la composition pour l'élastomère formant la couche 21 en élastomère, on a, pour 100g de Silplus© 70 HS, 1g de Di-cup 40C.

L'amortisseur testé a été fabriqué de manière classique pour l'homme du métier, avec cependant l'élastomère selon la composition fournie dans le tableau 1.

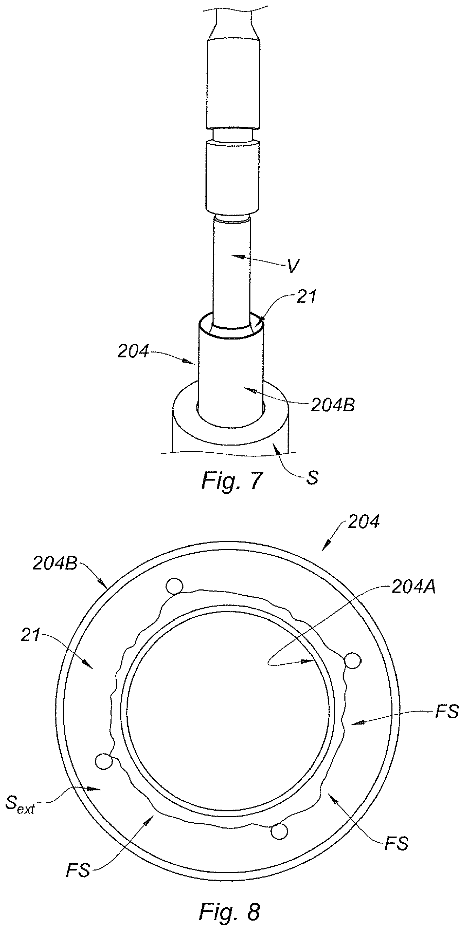

La figure 7 est un schéma montrant l'amortisseur 204 testé avec les moyens mis en oeuvre pour réaliser le test de fatigue. Sur cette figure 7, on remarque l'amortisseur 204, l'une 204B (armature extérieure) des armatures et la couche 21 en élastomère translucide. L'armature 204B est immobile et repose à cet effet sur un socle S. Un vérin V est prévu pour déplacer l'autre armature (armature interne ; non référencée sur la figure 7 car non visible) à une fréquence donnée. Le déplacement de l'armature interne 204A par rapport à l'armature externe 204B permet de faire travailler la couche 21 en élastomère reliant les deux armatures 204A, 204B.

Le test de fatigue consiste plus précisément, dans un premier temps, à déplacer l'armature intérieure 204A par l'intermédiaire du vérin V d'une distance d₀ = 2mm, par rapport à la position naturelle de cette armature intérieure. Puis, on déplace, à une fréquence de 19Hz, l'armature intérieure 204A de ±1,2mm. Ainsi, par rapport à sa position naturelle, l'armature intérieure peut prendre une position comprise entre 0,8mm et 3,2mm.

Cet essai de fatigue est représentatif d'un des modes de chargement et d'endommagement fréquemment rencontré pour ce type d'amortisseur, mais dont les sollicitations sont plus importantes que dans une situation réelle (conditions sévérisées), afin d'accélérer le phénomène d'endommagement par fatigue. Pour autant, il s'agit d'un test en fatigue tout à fait représentatif des conditions susceptibles d'être rencontrées pour un amortisseur séparant un moyeu et une pale de rotor d'hélicoptère.

Le critère pris en considération pour que l'amortisseur soit considérée comme devant être changé est basé sur une perte de 15% de la rigidité axiale de l'amortisseur, en référence à la rigidité de cet amortisseur avant le début du test (état neuf).

Sous l'effet du mouvement relatif répété entre les deux armatures 204A, 204B, une fissure se propage dans la couche en élastomère.

L'évolution de la rigidité axiale est suivie pendant le test, avec des moyens connus de l'homme du métier.

Lorsque le critère de perte de 15% de la rigidité axiale de l'amortisseur 204 est atteint, le test est arrêté.

On peut alors observer l'amortisseur.

On a représenté sur la figure 8, ce qui a pu être observé à l'issu du test, en l'occurrence à l'oeil nu (aucune lampe).

Sur cette figure 8, on observe les éléments d'armature 204A, 204B, la couche 21 en élastomère au niveau de sa surface extérieure Sₑₓₜ et on observe également la fissure FS, qui apparaît plus sombre. Cette fissure FS fait le tour de la couche en élastomère (360°) et débouche sur cette surface extérieure. En pratique d'ailleurs, le technicien de maintenance de l'aéronef se basera sur un critère relié aux dimensions de la fissure et non à une mesure de perte de rigidité axiale.

### Fin de l'exemple.

L'application à un amortisseur 204, en l'occurrence non lamifié, n'est qu'un exemple.

En effet, l'invention peut également s'appliquer à des structures lamifiées et plus généralement à différents types de dispositifs destinés à être installés entre deux pièces susceptibles de subir un mouvement relatif répété au sein d'un aéronef à voilure tournante.

On entend par lamifié un empilement 20 comprenant au moins une couche 21 en élastomère et au moins une coupelle 22 réalisée en un matériau non élastomère plus rigide que l'élastomère formant ladite au moins une couche 21 en élastomère.

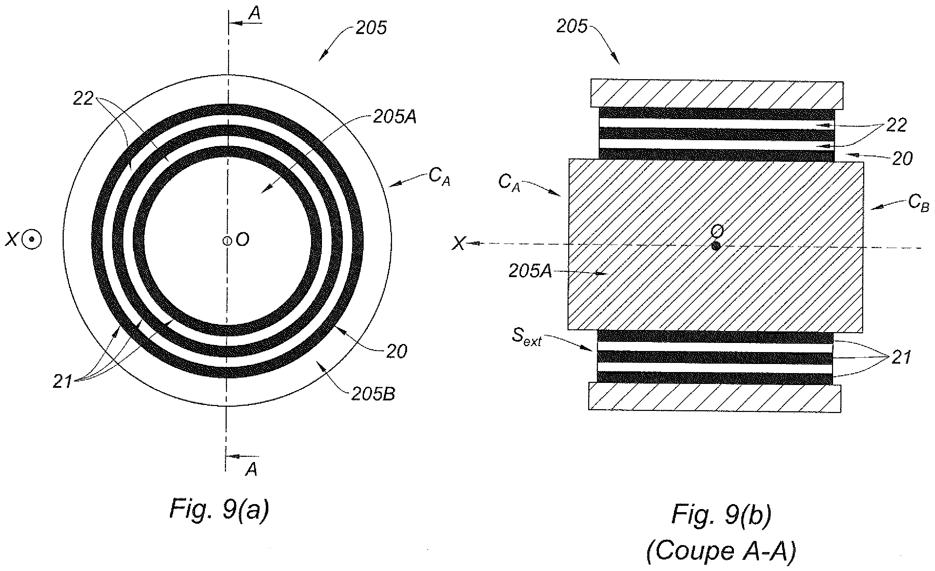

La figure 9 représente par exemple une articulation lamifiée, de forme cylindrique, conforme à l'invention. La figure 9(a) est une vue de côté de l'articulation lamifiée et la figure 9(b) une vue en coupe de cette articulation.

Cette articulation 205 comprend un premier élément d'armature 205A (armature intérieure), se présentant généralement sous la forme d'un cylindre plein et, un deuxième élément d'armature 205B (armature extérieure), se présentant généralement sous la forme d'un anneau. Le lamifié est un empilement 20 formé de couches 21 en élastomère séparées entre elles par des coupelles 22 réalisées en un matériau plus rigide que l'élastomère, les couches 21 et coupelles 22 étant disposées de façon alternée. Chaque coupelle 22 est par exemple réalisée en métal, avec un alliage métallique ou encore un matériau composite. Ce lamifié est disposé entre les deux armatures 205A, 205B, chaque couche 21 ou coupelle 22 présentant une forme cylindrique.

La forme cylindrique n'est pas essentielle, et l'articulation lamifiée 205 pourrait également présenter une forme conique, la conicité étant réalisée le long de l'axe OX (longitudinal).

Il convient de noter que la structure représentée sur les figures 9(a) et 9(b) pourrait également être celle d'un amortisseur 204 conforme à l'invention, présentant un lamifié entre les deux éléments d'armature.

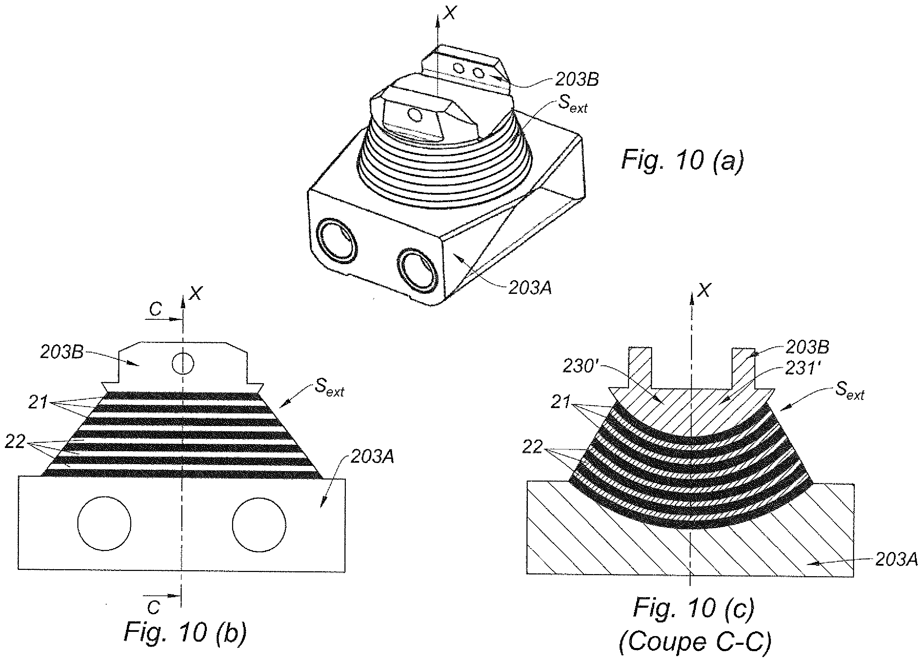

La figure 10 représente une butée lamifiée, en l'occurrence sphérique, conforme à l'invention. Il s'agit d'une butée lamifiée 203 typiquement utilisée dans le rotor principal 200 de l'hélicoptère qui est représenté sur la figure 1. La figure 10(a) est une vue générale de la butée lamifiée 203, en perspective. La figure 10(b) est une vue de côté de la butée lamifiée de la figure 10(a) et la figure 10(c) est une en coupe de la butée lamifiée représentée sur la figure 10(b).

Cette butée lamifiée 203 comprend deux éléments d'armature 203A, 203B destinés à être chacun monté sur l'une des pièces 201, 202, du rotor 200, comme cela est représenté sur la figure 1.

Cette butée 203 comprend un lamifié 20 disposé entre les deux éléments d'armature 203A, 203B. Le lamifié est un empilement 20 formé de couches 21 en élastomère séparées entre elles par des coupelles 22 réalisées en un matériau non élastomère plus rigide que l'élastomère formant lesdites couches en élastomère, les couches 21 et coupelles 22 étant disposées de façon alternée. Chaque coupelle 22 peut être réalisée en métal, avec un alliage métallique ou encore un matériau composite.

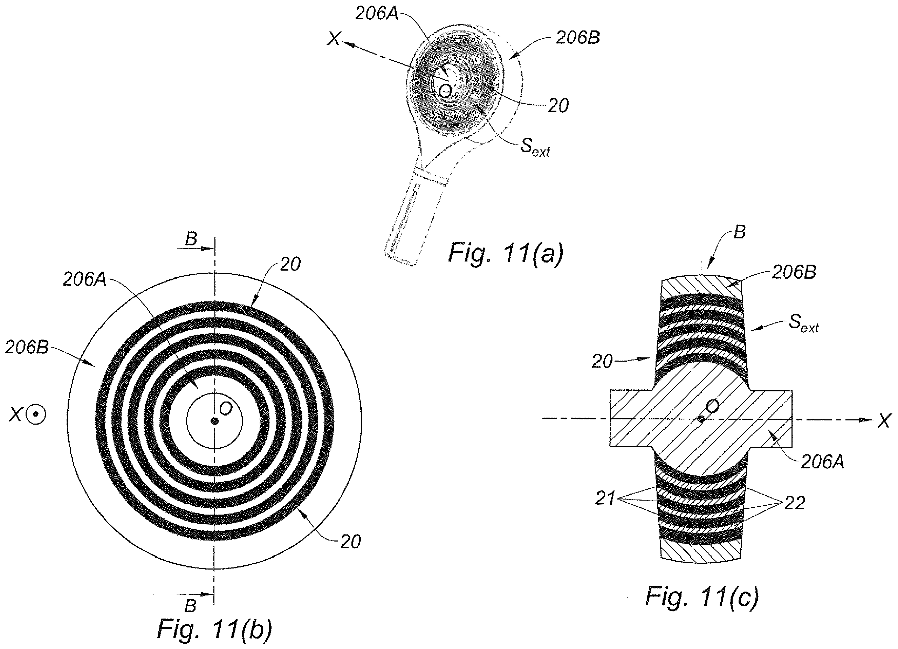

Sur la figure 11, on a représenté une rotule lamifiée 206 conforme à l'invention. Plus précisément, la figure 11(a) est une vue générale en perspective de cette rotule lamifiée, la figure 11(b) une vue de face partielle et la figure 11(c) une vue en coupe de la représentation de la figure 11(b).

Cette rotule lamifiée 206 présente un premier élément d'armature 206A et un deuxième élément d'armature 206B entre lesquelles un lamifié de type sphérique est disposé. Le lamifié ou empilement 20 est formé de couches 21 en élastomère séparées entre elles avec des coupelles 22 réalisées en un matériau plus rigide que l'élastomère, les couches 21 et coupelles 22 étant disposées de façon alternée. Chaque coupelle 22 peut être réalisée en métal, avec un alliage métallique ou encore un matériau composite.

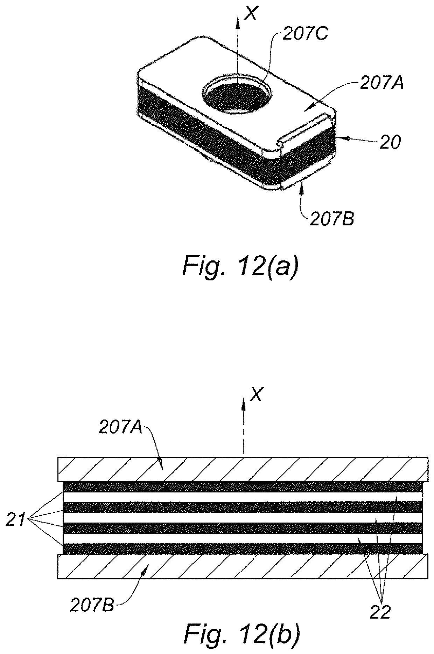

La figure 12, qui comporte les figures 12(a) et 12(b), représente un palier lamifié conforme à l'invention selon différentes vues. La figure 12(a) est une vue générale de cette butée, en perspective. La figure 12(b) est une vue de côté.

Le palier lamifié 207 comprend un premier élément d'armature 207A et un deuxième élément d'armature 207B ainsi qu'un lamifié ou empilement 20 disposé entre les deux éléments d'armature 205A, 205B. Le lamifié est formé de couches 21 en élastomère séparées entre elles par des coupelles 22 réalisées en un matériau plus rigide que l'élastomère, les couches 21 et coupelles 22 étant disposées de façon alternée. Chaque coupelle 22 peut être réalisée en métal, avec un alliage métallique ou encore un matériau composite.

Un orifice central 207C est généralement prévu pour réaliser la liaison avec les pièces de l'aéronef qui sont amenées à subir un mouvement relatif répété (non représentées).

Les couches 21 et coupelles 22 sont planes.

Sur les figures 12(a) et 12(b) annexées, la forme générale du palier lamifié 207 est rectangulaire.

Il est cependant envisageable de prévoir une autre forme, par exemple circulaire. Le lamifié reste alors formé de couches 21 en élastomère séparées entre elles par des coupelles 22 réalisées en un matériau plus rigide que l'élastomère, les couches 21 et coupelles 22 étant disposées de façon alternée. Les couches 21 et les coupelles 22 restent planes, mais avec une forme circulaire.

Pour l'ensemble des modes de réalisation décrits à l'appui des figures 9(a), 9(b), 10(a) à 10(c), 11(a) à 11(c), 12(a) et 12(b), chaque couche en élastomère 21 est représentée en foncé, afin de faire apparaître, sur ces figures, un différence observable avec les coupelles 21. Pour autant, dans le cadre de l'invention, et pour tous ces modes de réalisation, on comprend que l'élastomère de chaque couche en élastomère 21 est réalisé est un élastomère translucide.

Ainsi, pour l'ensemble des modes de réalisation décrits à l'appui des figures 9(a), 9(b), 10(a) à 10(c), 11(a) à 11(c), 12(a) et 12(b), lorsqu'une fissure apparaît, celle-ci apparaît plus sombre que son environnement en élastomère translucide. La détection de la fissure peut être facilitée à l'aide d'une lampe émettant dans le domaine visible pour obtenir un meilleur contraste entre la fissure et l'élastomère entourant cette fissure.

A titre d'exemple, on peut prévoir, pour la couche 21 en élastomère, la composition fournie dans le tableau 1 qui propose un élastomère translucide utilisable pour les applications envisagées.

En complément, l'élastomère translucide, tel que celui qui est proposé dans le tableau 1, peut comporter un additif qui permet d'améliorer le contraste entre la fissure (absence d'élastomère) et l'élastomère translucide entourant cette fissure. L'homme du métier comprendra que l'additif ne change donc pas la caractère translucide de l'élastomère.

Un additif envisageable à l'élastomère translucide peut être un additif présentant des propriétés de luminescence. Il peut s'agir d'un azurant optique, qui selon sa nature, peut conférer à la couche en élastomère translucide des propriétés fluorescentes ou phosphorescentes. Un exemple d'azurant optique susceptible de convenir est le benzoxazole, par exemple proposé sous la dénomination COMAX® OA par la société COMA Additive GmbH. De manière générale, la détection de la fissure sera alors facilitée à l'aide d'une lampe émettant dans un domaine permettant de faire apparaître les propriétés de luminescence : on peut ainsi faire apparaître un contraste entre l'élastomère et la fissure. Dans le cas particulier du COMAX®, il conviendra d'utiliser une lampe UV (ultraviolet).

Un autre additif envisageable à l'élastomère translucide peut être un additif non luminescent. Par exemple, il peut s'agir d'un additif du type silice de pyrogénation, tel que celui qui est proposé par la société Evonik Industries AG Silica sous la dénomination Aerosil® R 812. Le nom chimique de l'Aerosil® R 812 est le silanamine, 1, 1, 1-triméthyl-N-(triméthylsilyl)-. Là également, la détection de la fissure peut être améliorée à l'aide d'une lampe émettant dans le domaine visible.

Il convient de noter que les deux types d'additifs, luminescent d'une part et non luminescent d'autre part peuvent être envisagés dans l'élastomère translucide.

Pour fabriquer un dispositif selon l'un quelconque des modes de réalisation décrits à l'appui des figures 9(a), 9(b), 10(a) à 10(c), 11(a) à 11(c), 12(a) et 12(b), le procédé de fabrication est classique avec cependant, un élastomère translucide qui peut comprendre un ou plusieurs additifs tels que ceux écrits précédemment pour améliorer le contraste entre la fissure et l'élastomère, lorsqu'une telle fissure est présente dans l'élastomère.

En définitive, pour l'ensemble des modes de réalisation décrits précédemment, la solution proposée dans le cadre de l'invention permet de faciliter la détection d'une fissure dans une couche en élastomère du dispositif, par rapport à un dispositif classique pour lequel aucune disposition n'est prévue à cette effet. Cette fissure se propage typiquement dans l'élastomère, n'est généralement pas présente dans les coupelles 22 ni d'ailleurs dans les armatures du dispositif qui sont réalisées en un matériau plus rigide que l'élastomère et ne subissent par ailleurs, pas de mouvement répété les conduisant à une fatigue, le déplacement relatif entre les armatures étant absorbés par l'élastomère qui relie ces armatures l'une à l'autre.

Au regard du document D1, la solution proposée dans le cadre de l'invention évite également tout défaut d'identification de la fissure car il importe peu, dans l'invention, que les miettes d'élastomère générées par la fatigue du dispositif restent au contact ou non de la surface extérieure de ce dispositif (cas d'une butée lamifiée, en particulier).

Au regard du document D2, la solution proposée par l'invention est plus simple, n'implique pas de surpoids (ce qui est d'importance pour tout aéronef à voilure tournante), n'implique pas de dégradation des performances mécaniques et n'est pas soumise à un éventuel défaut d'un capteur de pression.

Enfin, il convient de noter que pour certains des dispositifs décrits précédemment, en particulier pour les amortisseurs 204 tels que ceux qui sont représentés sur les figures 4(a) à 4(c), des pliures peuvent apparaître sur la surface externe Sₑₓₜ du dispositif en cours d'utilisation. Ces pliures surfaciques sont liées au mouvement relatif répété entre les deux armatures du dispositif. L'utilisation d'un élastomère translucide pour former la couche 21 en élastomère limite voire évite la confusion que pourrait faire un technicien de maintenance entre une pliure, sans conséquence notable sur le comportement mécanique du dispositif, et une fissure.

Ces pliures peuvent apparaître sur d'autres types de dispositifs, par exemple sur les butées lamifiées 203.

## Revendications

1. Dispositif (203, 204, 205, 206, 207) destiné à être interposé entre deux pièces (201, 202) d'un aéronef à voilure tournante qui sont susceptibles de subir un mouvement relatif répété, le dispositif comprenant :
- au moins deux éléments d'armature (203A, 204A, 205A, 206A, 207A ; 203B, 204B, 205B, 206B, 207B) destinés à être montés sur l'une au moins des deux pièces (201, 202), et
- au moins une couche (21) en élastomère disposée entre les deux éléments d'armature,
**caractérisé en ce que** l'élastomère formant ladite au moins une couche (21) en élastomère est translucide.

2. Dispositif (203, 204, 205, 206, 207) selon la revendication 1, dans lequel l'élastomère translucide formant ladite au moins une couche (21) en élastomère comprend au moins un additif pour améliorer, lorsqu'une fissure est présente dans ladite couche (21), le contraste entre la fissure et l'élastomère.

3. Dispositif (203, 204, 205, 206, 207) selon la revendication précédente, dans lequel ledit au moins un additif présente des propriétés de luminescence.

4. Dispositif (203, 204, 205, 206, 207) selon l'une des revendications 2 ou 3, dans lequel l'élastomère translucide formant ladite au moins une couche (21) en élastomère comprend au moins deux additifs, pour améliorer, lorsqu'une fissure est présente dans ladite couche (21), le contraste entre la fissure et l'élastomère, l'un de ces additifs présentant des propriétés de luminescence, l'autre non.

5. Dispositif (203, 204, 205, 206, 207) selon l'une des revendications précédentes, dans lequel l'élastomère translucide formant ladite au moins une couche (21) en élastomère est à base de silicone, par exemple du Silplus 70 HS.

6. Dispositif (203, 204, 205, 206, 207) selon l'une des revendications précédentes, dans lequel il est prévu un empilement (20) comportant ladite au moins une couche (21) en élastomère translucide et au moins une coupelle (22) réalisée en un matériau non élastomère plus rigide que l'élastomère translucide formant ladite au moins une couche (21) en élastomère.

7. Dispositif (203, 204, 205, 206, 207) selon la revendication précédente, dans lequel l'empilement (20) comprend plusieurs couches (21) en élastomère translucide qui sont séparées entre elles par des coupelles (22) réalisées en un matériau non élastomère plus rigide que l'élastomère translucide formant lesdites couches (21) en élastomère, lesdites couches (21) et coupelles (22) étant disposées de façon alternée.

8. Procédé de fabrication d'un dispositif (203, 204, 205, 206, 207) selon l'une des revendications précédentes, dans lequel ladite au moins une couche (21) en élastomère translucide est utilisée.

9. Utilisation d'un dispositif (203, 204, 205, 206, 207) selon l'une des revendications 1 à 7 interposé entre deux pièces (201, 202) d'un aéronef à voilure tournante qui sont susceptibles de subir un mouvement relatif répété, pour détecter une fissure dans l'élastomère translucide formant ladite au moins une couche (21) en élastomère.

## Patentansprüche

1. Vorrichtung (203, 204, 205, 206, 207), die dazu bestimmt ist, zwischen zwei Teilen (201, 202) eines Drehflügelflugzeugs angeordnet zu sein, die einer wiederholten relativen Drehbewegung ausgesetzt sind, wobei die Vorrichtung umfasst:
- mindestens zwei Armierungselemente (203A, 204A, 205A, 206A, 207A; 203B, 204B, 205B, 206B, 207B), die bestimmt sind, auf mindestens einem der zwei Teile (201, 202) montiert zu sein, und
- mindestens eine Schicht (21) aus Elastomer, die zwischen den zwei Armierungselementen angeordnet ist,
**dadurch gekennzeichnet, dass** das Elastomer, das die mindestens eine Schicht (21) aus Elastomer bildet, durchscheinend ist.

2. Vorrichtung (203, 204, 205, 206, 207) nach Anspruch 1, wobei das durchscheinende Elastomer, das die mindestens eine Schicht (21) aus Elastomer bildet, mindestens einen Zusatz umfasst, um den Kontrast zwischen dem Riss und dem Elastomer zu verbessern, wenn ein Riss in der Schicht (21) vorhanden ist.

3. Vorrichtung (203, 204, 205, 206, 207) nach vorangehendem Anspruch, wobei der mindestens eine Zusatz Lumineszenzeigenschaften aufweist.

4. Vorrichtung (203, 204, 205, 206, 207) nach einem der Ansprüche 2 oder 3, wobei das durchscheinende Elastomer, das die mindestens eine Schicht (21) aus Elastomer bildet, mindestens zwei Zusätze umfasst, um den Kontrast zwischen dem Riss und dem Elastomer zu verbessern, wenn ein Riss in der Schicht (21) vorhanden ist, wobei einer dieser Zusätze Lumineszenzeigenschaften aufweist, der andere nicht.

5. Vorrichtung (203, 204, 205, 206, 207) nach einem der vorangehenden Ansprüche, wobei das durchscheinende Elastomer, das die mindestens eine Schicht (21) aus Elastomer bildet, auf der Basis von Silikon, beispielsweise von Silpius 70 HS, ist.

6. Vorrichtung (203, 204, 205, 206, 207) nach einem der vorangehenden Ansprüche, wobei ein Stapel (20) vorgesehen ist, der die mindestens eine Schicht (21) aus durchscheinendem Elastomer und mindestens eine Schale (22) aus einem Nichtelastomermaterial, das starrer als das durchscheinende Elastomer ist, das die mindestens eine Schicht (21) aus Elastomer bildet, aufweist.

7. Vorrichtung (203, 204, 205, 206, 207) nach vorangehendem Anspruch, wobei der Stapel (20) mehrere Schichten (21) aus durchscheinendem Elastomer umfasst, die voneinander durch Schalen (22), die aus einem Nichtelastomermaterial, das starrer als das durchscheinende Elastomer ist, das die Schichten (21) aus Elastomer bildet, getrennt sind, wobei die Schichten (21) und Schalen (22) abwechselnd angeordnet sind.

8. Verfahren zur Herstellung einer Vorrichtung (203, 204, 205, 206, 207) nach einem der vorangehenden Ansprüche, wobei die mindestens eine Schicht (21) aus durchscheinendem Elastomer verwendet wird.

9. Verwendung einer Vorrichtung (203, 204, 205, 206, 207) nach einem der Ansprüche 1 bis 7, die zwischen zwei Teilen (201, 202) eines Drehflügelflugzeugs angeordnet ist, die einer wiederholten relativen Drehbewegung ausgesetzt sind, um einen Riss in dem durchscheinenden Elastomer zu ermitteln, das die mindestens eine Schicht (21) aus Elastomer bildet.

## Claims

1. A device (203, 204, 205, 206, 207) intended to be inserted between two parts (201, 202) of a rotary-wing aircraft that are able to undergo a repeated relative movement, the device comprising:
- at least two frame elements (203A, 204A, 205A, 206A, 207A; 203B, 204B, 205B, 206B, 207B) intended to be mounted on at least one of the two parts (201, 202), and
- at least one elastomer layer (21) positioned between the two frame elements,
**characterized in that** the elastomer forming said at least one elastomer layer (21) is translucent.

2. The device (203, 204, 205, 206, 207) according to claim 1, wherein the translucent elastomer forming said at least one elastomer layer (21) comprises at least one additive to improve, when a crack is present in said layer (21), the contrast between the crack and the elastomer.

3. The device (203, 204, 205, 206, 207) according to the preceding claim, wherein said at least one additive has luminescence properties.

4. The device (203, 204, 205, 206, 207) according to one of claims 2 or 3, wherein the translucent elastomer forming said at least one elastomer layer (21) comprises at least two additives, to improve, when a crack is present in said layer (21), the contrast between the crack and the elastomer, one of these additives having luminescence properties, the other not having them.

5. The device (203, 204, 205, 206, 207) according to one of the preceding claims, wherein the translucent elastomer forming said at least one elastomer layer (21) has a silicone base, for example Silplus 70 HS.

6. The device (203, 204, 205, 206, 207) according to one of the preceding claims, wherein a stack (20) is provided including said at least one translucent elastomer layer (21) and at least one cup (22) made from a non-elastomer material that is more rigid than the translucent elastomer forming said at least one elastomer layer (21).

7. The device (203, 204, 205, 206, 207) according to the preceding claim, wherein the stack (20) comprises several translucent elastomer layers (21) that are separated from one another by cups (22) made from a non-elastomer material more rigid than the translucent elastomer forming said elastomer layers (21), said layers (21) and cups (22) being positioned alternating.

8. A method for manufacturing a device (203, 204, 205, 206, 207) according to one of the preceding claims, wherein said at least one translucent elastomer layer (21) is used.

9. A use of a device (203, 204, 205, 206, 207) according to one of claims 1 to 7 inserted between two parts (201, 202) of a rotary-wing aircraft that are able to undergo a repeated relative movement, to detect a crack in the translucent elastomer forming said at least one elastomer layer (21).
